# FASCICULE DE BREVET EUROPEEN

(11) **EP 4 696 407 B1**
(45) Date de publication et mention de la délivrance du brevet: **14.10.2026**
(21) Numéro de dépôt: 25190920.6
(22) Date de dépôt: 22.07.2025
(51) Int. Cl.: B01J 4/00, B01J 8/02, B01J 15/00, B01J 19/00, B64D 37/32

(54) **INSTALLATION POUR AÉRONEF COMPORTANT UN RÉSERVOIR DÉLIMITANT UN VOLUME AVEC UN POINT HAUT ET UN ÉLÉMENT CONTENANT DU DIHYDROGÈNE**
FLUGZEUGANLAGE MIT EINEM TANK ZUR BEGRENZUNG EINES VOLUMENS MIT EINEM HOHEN PUNKT UND EINEM DIWASSERSTOFFHALTIGEN ELEMENT
AIRCRAFT INSTALLATION COMPRISING A TANK DELIMITING A VOLUME WITH A TOP POINT AND AN ELEMENT CONTAINING DIHYDROGEN

(30) Priorité: 14.08.2024 FR 2408911
(43) Date de publication de la demande: 18.02.2026
(73) Titulaire: Airbus (S.A.S.), 31700 Blagnac (FR); AIRBUS OPERATIONS (S.A.S.), 31060 Toulouse (FR)
(72) Inventeur: CZAPLA, Lionel, Toulouse (FR); LANDOLT, Jonathan, Blagnac (FR)
(74) Mandataire: Airbus-OPS SAS

(56) Documents cités:
- EP-A1- 4 147 978
- FR-A1- 3 140 867
- GB-A- 2 624 873
- US-A1- 2016 159 492
- US-A1- 2024 158 095

## Description

### DOMAINE TECHNIQUE

L'invention concerne le domaine des aéronefs dans lequel est agencé un circuit de canalisations, de pompes, de réservoirs, etc pour du dihydrogène. L'invention concerne plus particulièrement une installation comportant un réservoir qui délimite un volume dans lequel est disposé un élément contenant du dihydrogène et où, dans le volume, est agencé un matériau catalyseur d'une réaction d'oxydation du dihydrogène avec l'air ambiant pour oxyder du dihydrogène. L'invention concerne également un aéronef comportant au moins une telle installation.

### ÉTAT DE LA TECHNIQUE ANTÉRIEURE

D'une manière connue, le dihydrogène peut constituer une alternative au pétrole dans la propulsion des véhicules, en particulier des aéronefs. À cette fin, un aéronef comporte un réservoir de dihydrogène qui alimente une pile à combustible pour générer de l'électricité qui alimente un moteur électrique, ou directement un moteur consommant le dihydrogène. L'aéronef comporte alors un réseau de canalisation, de pompes et autres éléments dans lesquels passe le dihydrogène. Pour des raisons de sécurité et limiter les risques de fuites de dihydrogène, il est connu d'utiliser par exemple des canalisations à double peau.

Certains de ces éléments sont embarqués dans des réservoirs qui présentent des entrées-sorties pour le dihydrogène. Cet enfermement de ces éléments dans un réservoir permet d'assurer une retenue supplémentaire du dihydrogène en cas de fuite à l'intérieur du réservoir. Bien qu'un tel arrangement permette d'avoir un niveau de sécurité suffisant, il peut être utile de prévoir un autre arrangement qui limite les risques de concentrations de dihydrogène dans l'aéronef et plus particulièrement dans le réservoir.

Les documents US2016/159492A1 et EP4147978A1 décrivent chacun une installation pour aéronef comportant un réservoir délimitant un volume avec un point haut, un canal d'évacuation arrangé à travers une paroi du réservoir à proximité du point haut, un contenant dans lequel du dihydrogène est présent et qui est arrangé dans le volume, et un catalyseur destiné à catalyser une réaction d'oxydation du dihydrogène avec l'air du réservoir, où le catalyseur est fixé au niveau du canal d'évacuation.

### EXPOSÉ DE L'INVENTION

Un objet de la présente invention est de proposer une installation pour aéronef comportant un réservoir qui délimite un volume dans lequel est disposé un élément contenant du dihydrogène et où, dans le volume, est agencé un matériau catalyseur d'une réaction d'oxydation du dihydrogène avec l'air ambiant pour oxyder du dihydrogène.

À cet effet, est proposée une installation pour aéronef selon la revendication 1.

Avec un tel arrangement, le dihydrogène est consommé ce qui évite sa trop grande concentration.

Avantageusement, l'installation comporte à travers une paroi du réservoir, un canal d'introduction arrangé pour introduire de l'air dans le volume.

Avantageusement, l'installation comporte un catalyseur additionnel destiné à catalyser une réaction d'oxydation du dihydrogène avec l'air du réservoir, où le catalyseur additionnel est fixé au niveau du canal d'introduction.

Avantageusement, l'installation comporte pour le ou chaque catalyseur, un capteur de température arrangé pour mesurer la température dudit catalyseur.

Selon un mode de réalisation particulier, le ou chaque catalyseur est constitué d'une couche d'une substance catalytique déposée :
- sur une face intérieure du réservoir autour de l'embouchure de chaque canal, et/ou
- sur une paroi intérieure de chaque canal à proximité de l'embouchure dudit canal.

Selon un mode de réalisation particulier, le ou chaque catalyseur est constitué d'un support recouvert d'une substance catalytique, où le support est :
- fixé à l'intérieur du réservoir autour de chaque canal, et/ou
- au niveau de l'embouchure de chaque canal.

L'invention propose également un aéronef comportant au moins une installation selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
La figure 1 est une vue de face et en coupe d'un aéronef dans lequel une installation selon l'invention est mise en œuvre, et
La figure 2 est une vue de côté d'une installation selon l'invention.

### EXPOSÉ DÉTAILLÉ DE MODES DE RÉALISATION

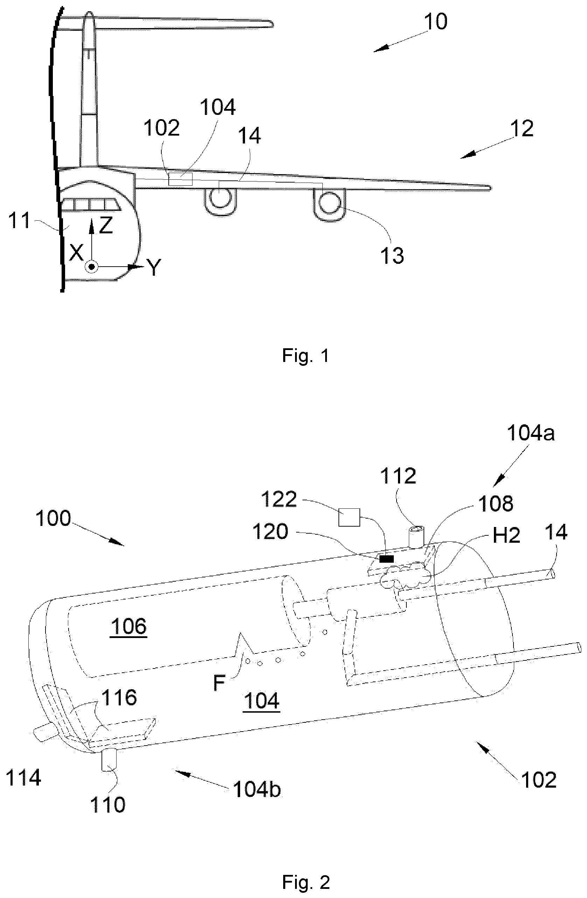

La figure 1 montre un aéronef 10 qui comporte un fuselage 11, et de part et d'autre du fuselage 11, une aile 12. L'aéronef 10 comporte des moteurs 13 qui sont alimentés en dihydrogène par des canalisations 14 depuis un réservoir de dihydrogène qui est disposé par exemple dans le fuselage 11.

Le dihydrogène est utilisé pour réaliser une combustion dans le moteur 13 ou pour alimenter une pile à combustible présente au voisinage du moteur 13 qui est alors alimenté en électricité depuis cette pile à combustible.

Pour permettre la fourniture de dihydrogène le long de l'aile 12 et jusqu'à chacun des moteurs 13, l'aéronef 10 comporte d'une manière générale des canalisations 14, des pompes 14a et tout autre dispositif nécessaire. Ces éléments sont par la suite appelés « contenants 106 » et dans chacun, du dihydrogène est présent.

L'aéronef 10 comporte un certain nombre de réservoirs 102 qui sont répartis dans l'aéronef 10 et par exemple sur la figure 1 dans l'aile 12. Le réservoir 102 délimite un volume 104 plus ou moins étanche au dihydrogène et qui, en tout cas, de par sa conception délimite un volume 104 dans lequel le dihydrogène peut s'accumuler.

La figure 2 montre le réservoir 102 qui prend une forme allongée.

La figure 2 montre une installation 100 selon l'invention qui comporte le réservoir 102. Bien que ce mode de réalisation s'appuie sur un réservoir 102 logé dans l'aile 12, l'invention s'applique de la même manière à tout autre réservoir disposé ailleurs dans l'aéronef 10.

L'aéronef 10 peut avoir plusieurs installations 100 réparties à différents endroits.

L'installation 100 comporte également au moins un contenant 106 qui est arrangé dans le volume 104, comme précisé ci-dessus, le contenant 106 peut être tout élément ou ensemble d'éléments contenant du dihydrogène, comme une pompe, un échangeur thermique, une canalisation 14, etc.

Le volume 104 présente un point haut 104a au niveau duquel du dihydrogène H2 est susceptible de s'accumuler en cas de fuite F au niveau du contenant 106 et pour limiter la concentration de dihydrogène au niveau du point haut 104a, l'installation 100 comporte à travers une paroi du réservoir 102, un canal d'évacuation 112 qui est arrangé au niveau du point haut 104a.

L'installation 100 comporte également un catalyseur 108 qui est destiné à catalyser une réaction d'oxydation du dihydrogène avec l'air du réservoir 102. Le dihydrogène est ainsi oxydé pour former de l'eau.

Afin de transformer le plus de dihydrogène possible, le catalyseur 108 est fixé ici dans le volume 104 au niveau du canal d'évacuation 112, c'est-à-dire ici au voisinage du point haut 104a. La position du catalyseur 108 au niveau du canal d'évacuation 112 est telle que le dihydrogène H2 accumulé entre forcément en contact avec le catalyseur 108 lorsqu'il s'évacue.

Le catalyseur 108 est par exemple constitué d'un support, comme une grille, une plaque, etc recouvert d'une substance catalytique adaptée comme de l'alumine et/ou de l'oxyde de cérium et/ou un platinoïde (platine, palladium, dioxyde de platine).

D'une manière générale, dans le cas d'un catalyseur 108 sous forme d'un support, le catalyseur 108 est arrangé entre le canal d'évacuation 112 et le contenant 106 et le passage à travers le catalyseur 108 est favorisé lorsque celui-ci est perméable aux gaz et prend par exemple la forme d'une grille sur laquelle la substance catalytique est déposée.

Le catalyseur 108 peut également être une couche d'une substance catalytique comme une peinture.

Selon la configuration du réservoir 102, la consommation de dihydrogène et de dioxygène va entraîner une baisse de pression dans le volume 104 si celui-ci est hermétique mais le dioxygène sera remplacé si le volume 104 n'est pas hermétique. Mais dans tous les cas, la consommation du dihydrogène va diminuer sa proportion dans le volume 104.

Pour évacuer l'eau ainsi formée, un canal d'assèchement 110 peut être arrangé au niveau d'un point bas 104b du volume 104. Le canal d'assèchement 110 traverse ainsi une paroi du réservoir 102 et assure l'évacuation de l'eau liquide hors du volume 104.

En complément, pour améliorer l'arrivée de dioxygène dans le volume 104 lorsque celui-ci est trop étanche, l'installation 100 comporte à travers une paroi du réservoir 102, un canal d'introduction 114 qui permet d'introduire de l'air dans le volume 104.

Le canal d'introduction 114 est ici au niveau du point bas 104b, mais il peut être à un autre endroit.

Du fait des mouvements de l'aéronef 10 durant un vol, ainsi que des différences de pression entre le volume 104 et l'extérieur du réservoir 102, de l'air et/ou du dihydrogène peut être amené à sortir du volume 104 par le canal d'introduction 114 ou le canal d'assèchement 110. Pour que le dihydrogène sortant du volume 104 par le canal d'introduction 114 ou le canal d'assèchement 110 soit également transformé, l'installation 100 comporte un catalyseur additionnel 116 destiné à catalyser une réaction d'oxydation du dihydrogène avec l'air du réservoir 102. Ce catalyseur additionnel 116 est alors fixé dans le volume 104 au niveau du canal d'introduction 114 et/ou du canal d'assèchement 110.

Le catalyseur additionnel 116 peut prendre la même forme et la même composition que le catalyseur 108, c'est-à-dire soit un support recouvert d'une substance catalytique, soit une couche d'une substance catalytique.

Dans le cas d'un support recouvert d'une substance catalytique, le ou chaque support est fixé à l'intérieur du réservoir 102 au niveau du point haut 104a et/ou au niveau de l'embouchure de chaque canal 112, 110, 114. Selon un mode de réalisation particulier, le support est fixé dans le volume 104 entre le contenant 106 et l'embouchure du canal considéré dans la paroi du réservoir 102. Selon un autre mode de réalisation particulier, le support est fixé à l'extérieur du réservoir 102 au niveau de la sortie du canal considéré. Plus particulièrement, le ou chaque support est fixé à l'intérieur du réservoir 102 autour du canal 112, 110, 114 considéré et/ou au niveau de l'embouchure du canal 112, 110, 114 considéré.

Dans le cas d'une couche d'une substance catalytique, le ou chaque catalyseur 108, 116 est déposé sur une face intérieure du réservoir 102 au niveau du point haut 104a et/ou autour de chaque canal 112, 110, 114, en particulier sur la face intérieure du réservoir 102 autour de l'embouchure du canal considéré dans la paroi du réservoir 102.

En complément ou en remplacement, dans le cas d'une couche d'une substance catalytique, le ou chaque catalyseur 108, 116 est déposé sur une paroi intérieure de chaque canal 112, 110, 114 à proximité de l'embouchure dudit canal 112, 110, 114.

La température du catalyseur 108, 116 est fonction entre autres de la quantité de dihydrogène qui a été oxydé du fait que cette réaction d'oxydation est exothermique. Ainsi, en surveillant la température de chaque catalyseur 108, 116 de l'aéronef 10, il est possible de présumer de la présence ou non de dihydrogène au niveau de chaque catalyseur 108, 116.

À cette fin, l'installation 100 comporte pour chaque catalyseur 108, 116, un capteur de température 120, par exemple un thermocouple, qui est monté par exemple contre le catalyseur 108, 116 et qui mesure la température dudit catalyseur 108, 116.

Cette information est ensuite transmise à une unité de contrôle 122 qui en fonction de l'information reçue et en la comparant à un intervalle de température référence, peut déduire de la présence ou non de dihydrogène au niveau de chaque catalyseur 108, 116. À partir de là, il peut informer le personnel d'une possible fuite F de dihydrogène dans l'aéronef 10. L'unité de contrôle 122 constitue une plateforme matérielle qui présente, reliés par un bus de communication : un processeur ou CPU (« Central Processing Unit » en anglais), une mémoire vive RAM (« Read-Only Memory » en anglais), une mémoire morte, par exemple de type ROM (« Read Only Memory » en anglais) ou EEPROM (« Electrically-Erasable Programmable ROM » en anglais), une unité de stockage, telle qu'un disque dur HDD (« Hard Disk Drive » en anglais), ou un lecteur de support de stockage, tel qu'un lecteur de cartes SD (« Secure Digital » en anglais), et un gestionnaire d'interfaces en liaison avec chaque capteur de température 120 et une interface de communication avec le personnel. Le processeur est capable d'exécuter des instructions chargées dans la mémoire vive à partir de la mémoire morte, d'une mémoire externe, d'un support de stockage (tel qu'une carte SD), ou d'un réseau de communication. Lorsque l'unité de contrôle 122 est mise sous tension, le processeur est capable de lire de la mémoire vive des instructions et de les exécuter. Ces instructions forment un programme d'ordinateur causant l'implémentation, par le processeur, de tout ou partie des étapes et fonctionnements décrits ici.

Tout ou partie des étapes et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais). D'une manière générale, la plateforme matérielle comporte de la circuiterie électronique adaptée et configurée pour implémenter les fonctionnements et étapes décrits ici.

## Revendications

1. Installation (100) pour aéronef (10), ladite installation (100) comportant :
- un réservoir (102) délimitant un volume (104) qui présente un point haut (104a) et un point bas (104b),
- à travers une paroi du réservoir (102), un canal d'évacuation (112) arrangé à proximité du point haut (104a),
- un contenant (106) dans lequel du dihydrogène est présent et qui est arrangé dans le volume (104),
- un catalyseur (108) destiné à catalyser une réaction d'oxydation du dihydrogène avec l'air du réservoir (102), où le catalyseur (108) est fixé au niveau du canal d'évacuation (112), et
- au niveau du point bas (104b), un canal d'assèchement (110) arrangé à travers une paroi du réservoir (102) pour évacuer de l'eau liquide hors du volume (104),
**caractérisée en ce qu'**elle comporte un catalyseur additionnel (116) destiné à catalyser une réaction d'oxydation du dihydrogène avec l'air du réservoir (102), où le catalyseur additionnel (116) est fixé au niveau du canal d'assèchement (110).

2. Installation (100) selon la revendication 1, **caractérisée en ce qu'**elle comporte à travers une paroi du réservoir (102), un canal d'introduction (114) arrangé pour introduire de l'air dans le volume (104).

3. Installation (100) selon la revendication 2, **caractérisée en ce qu'**elle comporte un catalyseur additionnel (116) destiné à catalyser une réaction d'oxydation du dihydrogène avec l'air du réservoir (102), où le catalyseur additionnel (116) est fixé au niveau du canal d'introduction (114).

4. Installation (100) selon l'une des revendications précédentes, **caractérisée en ce qu'**elle comporte pour le ou chaque catalyseur (108, 116), un capteur de température (120) arrangé pour mesurer la température dudit catalyseur (108, 116).

5. Installation (100) selon l'une des revendications précédentes, **caractérisée en ce que** le ou chaque catalyseur (108, 116) est constitué d'une couche d'une substance catalytique déposée :
- sur une face intérieure du réservoir (102) autour de l'embouchure de chaque canal (112, 110, 114), et/ou
- sur une paroi intérieure de chaque canal (112, 110, 114) à proximité de l'embouchure dudit canal (112, 110, 114).

6. Installation (100) selon l'une des revendications précédentes, **caractérisée en ce que** le ou chaque catalyseur (108, 116) est constitué d'un support recouvert d'une substance catalytique, où le support est :
- fixé à l'intérieur du réservoir (102) autour de chaque canal (112, 110, 114), et/ou
- au niveau de l'embouchure de chaque canal (112, 110, 114).

7. Aéronef (10) comportant au moins une installation (100) selon l'une des revendications précédentes.

## Patentansprüche

1. Anlage (100) für ein Luftfahrzeug (10), die Anlage (100) umfassend:
- einen Tank (102), der ein Volumen (104) begrenzt, das einen Hochpunkt (104a) und einen Tiefpunkt (104b) aufweist,
- durch eine Wand des Tanks (102) hindurch, einen Abführkanal (112), der in der Nähe des Hochpunktes (104a) eingerichtet ist,
- ein Behältnis (106), in dem sich Wasserstoff befindet und das in dem Volumen (104) eingerichtet ist, und
- einen Katalysator (108), der dazu bestimmt ist, eine Oxidationsreaktion des Wasserstoffs mit der Luft des Tanks (102) zu katalysieren, wobei der Katalysator (108) an dem Abführkanal (112) fixiert ist, und
- an dem Tiefpunkt (104b) einen Entwässerungskanal (110), der durch eine Wand des Tanks (102) hindurch eingerichtet ist, um flüssiges Wasser aus dem Volumen (104) abzuführen,
**dadurch gekennzeichnet, dass** sie einen zusätzlichen Katalysator (116) umfasst, der dazu bestimmt ist, eine Oxidationsreaktion des Wasserstoffs mit der Luft des Tanks (102) zu katalysieren, wobei der zusätzliche Katalysator (116) an dem Entwässerungskanal (110) fixiert ist.

2. Anlage (100) nach Anspruch 1, **dadurch gekennzeichnet, dass** sie durch eine Wand des Tanks (102) hindurch einen Einleitungskanal (114) umfasst, der dazu eingerichtet ist, Luft in das Volumen (104) einzuleiten.

3. Anlage (100) nach Anspruch 2, **dadurch gekennzeichnet, dass** sie einen zusätzlichen Katalysator (116) umfasst, der dazu bestimmt ist, eine Oxidationsreaktion des Wasserstoffs mit der Luft des Tanks (102) zu katalysieren, wobei der zusätzliche Katalysator (116) an dem Einleitungskanal (114) fixiert ist.

4. Anlage (100) nach einem der vorhergehenden Ansprüche, **dadurch gekennzeichnet, dass** sie für den oder jeden Katalysator (108, 116) einen Temperatursensor (120) umfasst, der dazu eingerichtet ist, die Temperatur des Katalysators (108, 116) zu messen.

5. Anlage (100) nach einem der vorhergehenden Ansprüche, **dadurch gekennzeichnet, dass** der oder jeder Katalysator (108, 116) aus einer Schicht einer katalytischen Substanz besteht, die aufgebracht ist:
- auf eine Innenseite des Tanks (102) um die Mündung jedes Kanals (112, 110, 114) herum, und/oder
- auf eine Innenwand jedes Kanals (112, 110, 114) in der Nähe der Mündung des Kanals (112, 110, 114).

6. Anlage (100) nach einem der vorhergehenden Ansprüche, **dadurch gekennzeichnet, dass** der oder jeder Katalysator (108, 116) aus einem mit einer katalytischen Substanz beschichteten Träger besteht, wobei der Träger:
- im Inneren des Tanks (102) um jeden Kanal (112, 110, 114) herum fixiert ist, und/oder
- an der Mündung jedes Kanals (112, 110, 114) ist.

7. Luftfahrzeug (10), das mindestens eine Anlage (100) nach einem der vorhergehenden Ansprüche umfasst.

## Claims

1. Installation (100) for an aircraft (10), said installation (100) having:
- a tank (102) delimiting a volume (104) that has a high point (104a) and a low point (104b),
- through a wall of the tank (102), an evacuation channel (112) arranged near the high point (104a),
- a container (106) in which dihydrogen is present and which is arranged in the volume (104),
- a catalyzer (108) intended to catalyze an oxidation reaction of the dihydrogen with the air in the tank (102), wherein the catalyzer (108) is fastened at the evacuation channel (112), and
- at the low point (104b), a drying-out channel (110) arranged through a wall of the tank (102) to evacuate liquid water from the volume (104),
**characterized in that** it has an additional catalyzer (116) intended to catalyze an oxidation reaction of the dihydrogen with the air in the tank (102), wherein the additional catalyzer (116) is fastened at the drying-out channel (110).

2. Installation (100) according to Claim 1, **characterized in that** it has, through a wall of the tank (102), an introduction channel (114) arranged to introduce air into the volume (104).

3. Installation (100) according to Claim 2, **characterized in that** it has an additional catalyzer (116) intended to catalyze an oxidation reaction of the dihydrogen with the air in the tank (102), wherein the additional catalyzer (116) is fastened at the introduction channel (114).

4. Installation (100) according to one of the preceding claims, **characterized in that** it has, for the or each catalyzer (108, 116), a temperature sensor (120) arranged to measure the temperature of said catalyzer (108, 116).

5. Installation (100) according to one of the preceding claims, **characterized in that** the or each catalyzer (108, 116) is constituted of a layer of a catalytic substance deposited:
- on an inner face of the tank (102) around the mouth of each channel (112, 110, 114), and/or
- on an inner wall of each channel (112, 110, 114) near the mouth of said channel (112, 110, 114).

6. Installation (100) according to one of the preceding claims, **characterized in that** the or each catalyzer (108, 116) is constituted of a support covered with a catalytic substance, wherein the support is:
- fastened inside the tank (102) around each channel (112, 110, 114), and/or
- at the mouth of each channel (112, 110, 114).

7. Aircraft (10) having at least one installation (100) according to one of the preceding claims.
